(19) Europäisches Patentamt
European Patent Office
Office européen des brevets

(11) EP 4 696 756 A1

# (12) EUROPEAN PATENT APPLICATION
published in accordance with Art. 153(4) EPC

(43) Date of publication:
**18.02.2026 Bulletin 2026/08**

(21) Application number: **24853555.1**

(22) Date of filing: **30.07.2024**

(51) International Patent Classification (IPC):
***C09J 101/28*** *(2006.01)* ***H01M 4/62*** *(2006.01)*
***H01M 10/0525*** *(2010.01)*

(52) Cooperative Patent Classification (CPC):
Y02E 60/10

(86) International application number:
**PCT/CN2024/108365**

(87) International publication number:
**WO 2025/036143 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.08.2023 CN 202311039091**

(71) Applicant: **Chongquing Shuoyingfeng New Energy Technology Co., Ltd.**
**Chongqing 400000 (CN)**

(72) Inventors:
- **ZHENG, Zhiwen**
  **Chongqing 400000 (CN)**
- **FU, Dongxing**
  **Chongqing 400000 (CN)**
- **YAN, Xing**
  **Chongqing 400000 (CN)**
- **KUI, Zhirong**
  **Chongqing 400000 (CN)**
- **CHEN, Cong**
  **Chongqing 400000 (CN)**

(74) Representative: **Sun, Yanan**
**Hassler International Germany GmbH**
**Postfach 940247**
**60460 Frankfurt am Main (DE)**

## (54) SECONDARY BATTERY BINDER, NEGATIVE ELECTRODE SLURRY, ELECTRODE SHEET, AND SECONDARY BATTERY

(57) The present invention relates to the technical field of battery materials, and particularly to, a binder for a secondary battery. The binder for a secondary battery includes a component X and a component Y. The component X is formed by mixing a raw material X1 and a raw material X2. The component Y is obtained from a raw material Y1 and a raw material Y2 via a Schiff base reaction. The raw material X1, the raw material X2, and the raw material Y1 are all cellulose derivatives subjected to selective oxidative ring-opening, and the raw material Y2 is an amine substance having at least two terminal amino groups. The binder for a secondary battery provided by the present invention has higher toughness. The binder for a secondary battery provided by the present invention is used to prepare a battery slurry. The prepared battery electrode plate has significantly lower warpage during high-temperature baking, a lower probability of electrode plate coating powder peeling , and can achieve a higher electrode plate areal density, such that the energy density of the battery is improved.

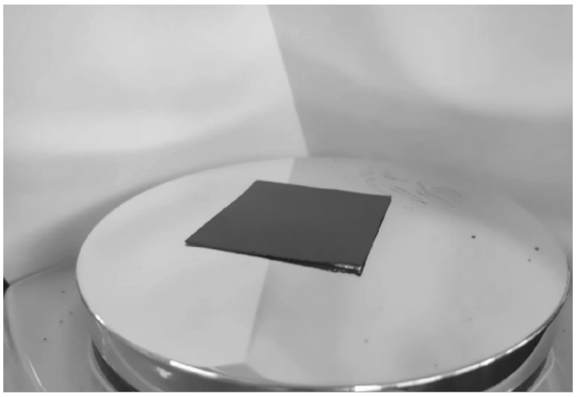

FIG. 1

EP 4 696 756 A1

## Description

### TECHNICAL FIELD

The present invention relates to the technical field of battery materials, and in particular to, a binder for a secondary battery, a negative electrode slurry, and a secondary battery.

### BACKGROUND

A secondary battery, also known as a rechargeable battery or a storage battery, is a battery that may be used continuously after discharge by charging through which active materials are activated, such as a lithium-ion battery and a sodium-ion battery. In the preparation process of a negative electrode plate of the secondary battery, the drying process of the coated electrode plate is one of the key and difficult points. After drying, the electrode plate is prone to warping, which is followed by phenomena such as cracking and coating powder shedding. This phenomenon not only causes scrapping of the electrode plate, increases production cost, but also reduces production efficiency. Furthermore, if such electrode plate is used in a battery, the rate performance and cycling stability of the battery would be detrimentally affected.

Currently, there are several improvement methods below: one of the improvement methods is to add anti-cracking agents into a negative electrode slurry, the anti-cracking agents include polypropylene glycol, an aqueous solution of polyglycol, and N-methylpyrrolidone (NMP), and the anti-cracking agents will remain inside the electrode plate when insufficiently volatilized, causing a certain loss in the initial Coulombic efficiency and capacity performance of the battery. Moreover, NMP has a certain degree of toxicity. Another improvement method is to solve the problem by improving coating and drying processes. For example, in Patent Publication No. CN115394945A, different drying methods, times, and temperatures are adopted for single-side coating and double-side coating, and the drying degrees of baking and airdrying are controlled, making the yield rate of electrode plate reach over 95%. For another example, in Patent Publication No. CN113991063A, a method of multiple coating occurrences is employed, and different slurry components are applied many times. A raw material of a first slurry layer includes 1.5 wt% polyacrylonitrile, a conductive agent, and an active substance, and a raw material of a second slurry layer includes 0.5 wt% polyacrylonitrile, 0.5 wt% styrene-butadiene rubber, a conductive agent, and an active substance. Although such methods have improved the cracking condition, these methods increase the process complexity and reduce the production efficiency.

### SUMMARY

An objective of the present invention is to provide a binder for a secondary battery, which can solve the warping problem of an electrode plate after drying and reduce the risk of electrode plate cracking and coating powder shedding, without introducing extra anti-cracking agents, such that the process difficulty is not increased.

A binder for a secondary battery provided by the present invention includes a component X and a component Y; the component X is formed by mixing a raw material X1 and a raw material X2; the component Y is prepared from a raw material Y1 and a raw material Y2 via a Schiff base reaction; the raw material X1, the raw material X2, and the raw material Y1 are all cellulose derivatives containing a repeating unit A and a repeating unit B, where

the repeating unit A is as follows:

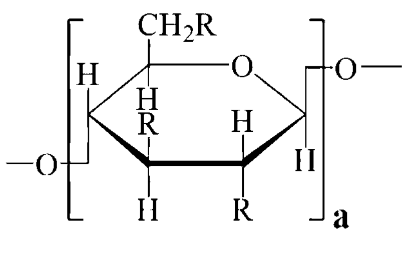

;

the repeating unit B is as follows:

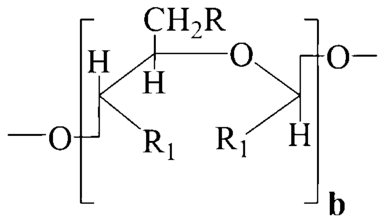

in the raw material X1, the raw material X2, and the raw material Y1, when a represents a molar weight of the repeating unit A and b represents a molar weight of the repeating unit B, the following relationship is satisfied: $0 < \frac{b}{a+b} < 1$; R in the repeating unit A and the repeating unit B is independently selected from -OH or one or more of derived groups thereof;

in the raw material X1, $R_1$ in the repeating unit B represents $-CH_2OH$;

in the raw material X2, $R_1$ in the repeating unit B represents -COOH;

in the raw material Y1, $R_1$ in the repeating unit B represents -CHO; and

the raw material Y2 is an amine substance containing at least two terminal amino groups.

In some preferred examples, a mass ratio of the component X to the component Y is (1-2):(1-2).
In some further preferred examples, a mass ratio of the component X to the component Y is 1:1.
In some preferred examples, a mass ratio of the raw material X1 to the raw material X2 is (1-2):(1-2).
In some further preferred examples, a mass ratio of the raw material X1 to the raw material X2 is 1: 1.
In some preferred examples, a mass ratio of the raw material Y1 to the raw material Y2 is (25-100):1.
In some possible examples, the raw material Y2 is selected from at least one of the following substances:

polyalkenes containing at least two terminal amino groups and derivatives thereof;

polyacrylamide containing at least two terminal amino groups and derivatives thereof;

polysilane ether containing at least two terminal amino groups and derivatives thereof; and

polyols having at least two terminal amino groups and derivatives thereof.

In some preferred examples, the raw material Y2 further includes an amine substance Y2-1 with a linear structure and an amine substance Y2-2 with a branched structure.
In some further preferred examples, the amine substance Y2-1 is polyethylene glycol diamine, and the amine substance Y2-2 is trimethylolpropane tris[poly(propylene glycol), amine terminated] ether.
The present invention further provides a negative electrode slurry composition for a secondary battery, including the binder for a secondary battery.
The present invention further provides a negative electrode for a secondary battery, having an electrode composite material layer prepared from the negative electrode slurry composition for a secondary battery.
The present invention further provides a secondary battery, having the negative electrode for a secondary battery.
The binder for a secondary battery provided by the present invention has higher toughness, and a binder film prepared thereby exhibits a higher elongation at break. The binder for a secondary battery provided by the present invention is used to prepare a battery slurry. The prepared battery electrode plate has significantly lower warpage during high-temperature baking, a lower coating powder shedding probability of the electrode plate, and can achieve a higher areal density of the electrode plate, such that the energy density of the battery is improved.

## BRIEF DESCRIPTION OF THE DRAWINGS

In order to more clearly explain the technical solutions in the embodiments of the present application or the prior

art, the accompanying drawings required for describing the embodiments or the prior art will be briefly introduced below.

FIG. 1 is an effect diagram of a warpage test of a negative electrode plate applying a binder for a secondary battery provided in Example 1 of the present invention.

FIG. 2 is an effect diagram of a warpage test of a negative electrode plate applying a binder for a secondary battery provided in Comparative Example 1 of the present invention.

## DETAILED DESCRIPTION OF EMBODIMENTS

Unless otherwise specified, all technical and scientific terms used herein have the same meanings as commonly understood by those of ordinary skill in the art to which the present invention pertains. Although the present invention only describes preferred methods and materials, any methods and materials similar or equivalent to those described herein may also be used in the practice or testing of the present invention. All documents mentioned in this specification are incorporated by reference to disclose and describe the methods and/or materials related to the said documents. In the event of a conflict with any incorporated document, the content of this specification shall prevail. With respect to terms such as 'comprise', 'include', 'have', and 'contain' used herein, they are all open-ended terms, meaning including but not limited to. The numerical ranges in the present invention shall be understood to also specifically disclose each intermediate value between the upper limit and the lower limit of the said range. Every smaller range between any stated value or intermediate value within a stated range and any other stated value or intermediate value within the said range is also included within the present invention. The upper and lower limits of these smaller ranges may be independently included in or excluded from the ranges. Unless otherwise specified, all experimental methods used in the present invention are conventional methods. Unless otherwise specified, the materials, reagents, and the like used in the present invention can all be obtained by purchase or synthesized by known methods.

The present invention provides a binder for a secondary battery, which includes a component X and a component Y; the component X is formed by mixing a raw material X1 and a raw material X2; the component Y is prepared from a raw material Y1 and a raw material Y2 via a Schiff base reaction; the raw material X1, the raw material X2, and the raw material Y1 are all cellulose derivatives containing a repeating unit A and a repeating unit B, where

the repeating unit A is as follows:

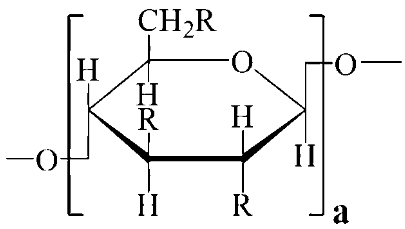

;

the repeating unit B is as follows:

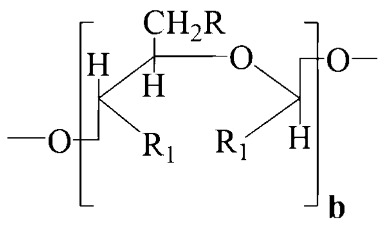

;

in the raw material X1, the raw material X2, and the raw material Y1, when a represents a molar weight of the repeating unit A and b represents a molar weight of the repeating unit B, the following relationship is satisfied: $0 < \frac{b}{a+b} < 1$; R in the repeating unit A and the repeating unit B is independently selected from one or more of -OH or derived groups thereof;

in the raw material X1, $R_1$ in the repeating unit B represents $-CH_2OH$;

in the raw material X2, $R_1$ in the repeating unit B represents -COOH;

in the raw material Y1, $R_1$ in the repeating unit B represents -CHO; and

the raw material Y2 is an amine substance containing at least two terminal amino groups.

During the drying process of the negative electrode plate of the battery, moisture in the negative electrode slurry evaporates, causing the volume of the coating to shrink to generate internal stress, which easily leads to the upward warping of the electrode plate. When the warpage reaches a certain degree, cracks are prone to form in the electrode plate coating. Different from the problem-solving approaches in the prior art that involve additionally adding anti-cracking agents or adjusting the coating and drying processes, the technical solutions provided in the embodiments of the present invention are intended to solve the warping problem of the electrode plate by reducing the internal stress of the coating material itself at high temperatures. In the negative electrode slurry, the binder is a bridge that connects various materials together and therefore, is also a bridge for interaction forces among the materials. As an organic polymeric material, the greater the rigidity of the molecular chains of the binder is, the more prone it is to generating internal stress. Compared with common cellulose derivatives, the cellulose derivatives used in the binder provided by the examples of the present invention, such as sodium carboxymethyl cellulose (CMC), open part of the rigid ring structure, and significantly improve the flexibility of the molecular chains of the cellulose derivatives, thereby reducing the internal stress of the material. The better the toughness of the binder is, the higher the elongation at break of the material after film formation is. When used as the binder for a battery coating, the possibility of coating cracking is correspondingly lower; and the stronger the adhesive force of the binder is, the less likely the electrode plate is to shed powder. In the technical solutions provided by the examples of the present invention, the component Y achieves high toughness through Schiff base crosslinking; and X1 and X2 in the component X contain a large number of hydroxyl or carboxyl groups, which are strongly polar groups, such that the adhesive force of the binder can be greatly enhanced.

In some specific examples, R in the repeating unit A and the repeating unit B may be independently represented as different groups. It is known to those skilled in the art that, without modification treatment, all R groups on cellulose represent -OH. In the prior art, -OH may be converted into derived functional groups by way of etherification, esterification, grafting, and the like. For example, -OH is derived into - $OCH_2COOH$, $-OCH_3$, $-OCH_2CH_3$, $-[OCH_2CH(CH_3)O]_nCH_3$, $-OCH_2CH_2OH$, $-ONO_2$, $-OSO_3Na$, and the like. Exemplarily, in an example, 3 R groups in the repeating unit A respectively represent -OH, $-OCH_2COONa$, and $-OCH_2COOLi$, and R in the repeating unit B represents $-OCH_2COOLi$; and in another example, 3 R groups in the repeating unit A respectively represent -OH, $-OCH_2CH_3COONa$, and $-OCH_2OH$, and R in the repeating unit B represents $-OSO_3Na$.

In some specific examples, in the raw material X1, the raw material X2, and the raw material Y1, when a represents a molar weight of the repeating unit A and b represents a molar weight of the repeating unit B, a relationship between a and b may also be $0 < \frac{b}{a+b} \leq 0.83$, or $0 < \frac{b}{a+b} \leq 0.70$, or $0 < \frac{b}{a+b} \leq 0.63$. In some preferred examples, the relationship between a and b further satisfies $0.04 \leq \frac{b}{a+b} \leq 0.35$, or

$$0.08 \leq \frac{b}{a+b} \leq 0.35, \text{ or } 0.13 \leq \frac{b}{a+b} \leq 0.26.$$

In some specific examples, the raw material Y2 may be polyalkenes containing at least two terminal amino groups and derivatives thereof, such as polypropylene-based amine shown in Formula (1), polyethyleneimine with a branched structure shown in Formula (2);

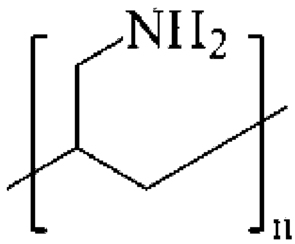

Formula (1)

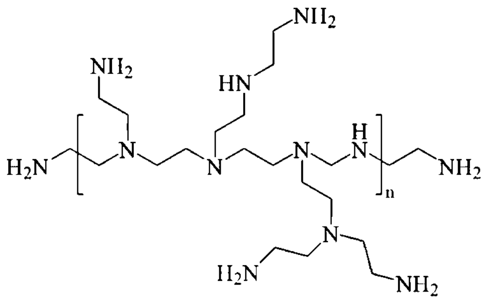

Formula (2)

The raw material Y2 may be polyacrylamide containing at least two terminal amino groups and derivatives thereof, such as polyacrylamide shown in Formula (3):

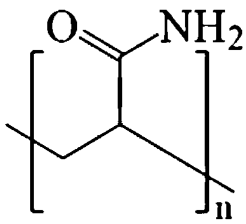

Formula (3)

The raw material Y2 may be silane ether containing at least two terminal amino groups and derivatives thereof, such as aminopropyl polydimethylsiloxane shown in Formula (4):

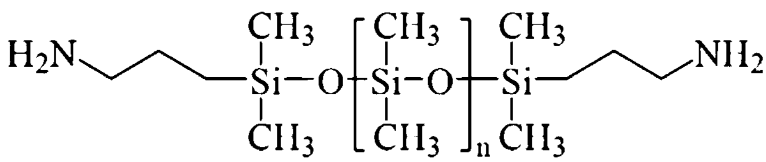

Formula (4)

The raw material Y2 may be polyols containing at least two terminal amino groups and derivatives thereof, such as polyethylene glycol diamine shown in Formula (5), polypropylene glycol, a 2-aminopropyl-terminated structure shown in Formula (6), and trimethylolpropane tris[poly(propylene glycol), amine terminated] ether shown in Formula (7):

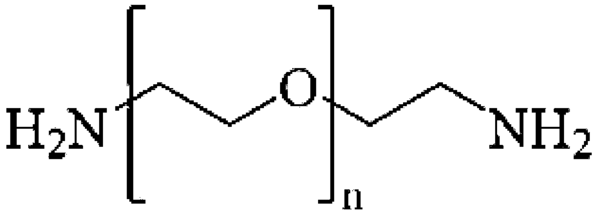

Formula (5)

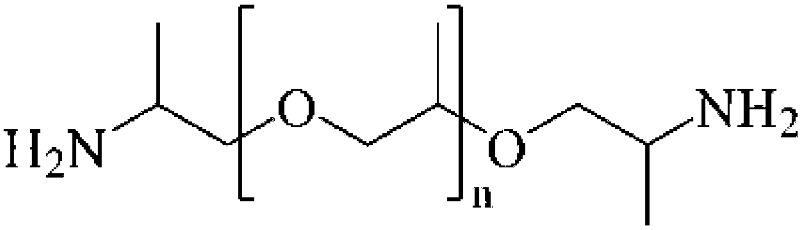

Formula (6)

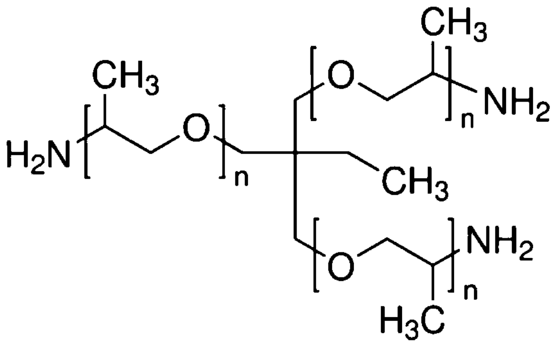

Formula (7)

In Formula (1) and Formula (3), n is a positive integer greater than or equal to 2; and in Formula (2), Formula (4), Formula (5), Formula (6), and Formula (7), n is a positive integer greater than or equal to 1.

In some specific examples, a mass ratio of the component X to the component Y is (1-2):(1-2), and may specifically be 1:2, 1:1.6, 1:1.5, 1:1.2, 1:1, 1.2:1, 1.5:1, 1.8:1, 2:1, and the like.

In some specific examples, a mass ratio of the raw material X1 to the raw material X2 is (1-2):(1-2), and may specifically be 1:2, 1:1.6, 1:1.5, 1:1.2, 1:1, 1.2:1, 1.5:1, 1.8:1, 2:1, and the like.

In some specific examples, a mass ratio of the raw material Y1 to the raw material Y2 is (25-100):1, and may specifically be 25:1, 30:1, 40:1, 50:1, 60:1, 70:1, 80:1, 90:1, 100:1, and the like.

The present invention sets forth numerous specific details through the following specific examples to facilitate a full understanding of the present invention. However, the present invention may also be implemented in other manners different from those described herein. Those skilled in the art may make similar extensions without departing from the connotation of the present invention, and therefore, the present invention is not limited to the specific examples disclosed below.

Example 1

<Preparation of a binder for a secondary battery>

Preparation of reactants: With the molar number of anhydroglucose units of sodium carboxymethyl cellulose (CMC, degree of substitution 0.8-0.9) as the reference, and the weight-average molecular weight being 180,000 Da, a 0.1 mol/L CMC aqueous solution was prepared.

$NaIO_4$ was dissolved in water in a light-shielded environment to prepare a 0.1 mol/L $NaIO_4$ aqueous solution.
$(CH_2OH)_2$ was dissolved in water to prepare a 0.1 mol/L $(CH_2OH)_2$ aqueous solution.
$NaBH_4$ was dissolved in water to prepare a 0.1 mol/L $NaBH_4$ aqueous solution.
$NaClO_2$ was dissolved in water to prepare a 0.1 mol/L $NaClO_2$ aqueous solution.

(I) Preparation of a raw material Y1

The above CMC aqueous solution was placed in a light-shielded reaction vessel, a reaction temperature was adjusted to 30°C and this temperature was kept, the $NaIO_4$ aqueous solution equal to the CMC aqueous solution in volume was slowly dropwise added into the reaction vessel (the molar ratio of the anhydroglucose units of CMC to $NaIO_4$ was 1:1), a mechanical stirring speed was adjusted to 500 rpm, after the pH value of the reaction environment was adjusted to 6 with a 1 mol/L $H_2SO_4$ solution, timing was started, and after the reaction for 30 min, an ethylene glycol($(CH_2OH)_2$)solution equal to the CMC aqueous solution in volume was added to terminate the reaction. After the reaction was completed, a mixed liquid after the reaction was slowly poured into a large amount of frozen methanol for precipitation and separation, and after being filtered, the precipitate was dried at room temperature to obtain a solid product, i.e., the raw material Y1.
b/a+b test: a represents the mole number of the repeating unit A, b represents the mole number of the repeating unit B, and a numerical value of b/a+b is determined. A first reactant was taken and then dispersed and dissolved. The content of aldehyde groups in the solution was measured a hydroxylamine hydrochloride method with reference to the following literature: Wang Qinmei, Liao Yanhong, Teng Wei et al., Determination of Concentration of Aldehyde Groups on Oxidized Sodium Alginate by Hydroxylamine Hydrochloride-Potentiometric Titration Method [J], Analytical Laboratory, 2008, 27(S1):83-86. Compared with the repeating unit structure of the reactant CMC, the relative molecular mass of the solid product after the reaction is not changed, and therefore, b=determined mole number of aldehyde groups/2. $\frac{b}{a+b}=0.62$ is measured for the raw material Y1 prepared in this example. In some other specific examples, the numerical value of b/a+b may be changed by adjusting the material ratio of sodium periodate to CMC. The adjustment mode may refer to Patent Application CN2023107423260 or CN2023110336003.

Preparation of a component Y

The raw material Y1 was prepared into a 20 g/L aqueous solution, the aqueous solution was placed in a reaction vessel, and a reaction temperature was adjusted to 60°C. The raw material Y2 was slowly added into the reaction vessel, a mechanical stirring speed was adjusted to 500 rpm, and a reaction was performed for 6 h. After the reaction was completed, a mixed liquid after the reaction was dropwise added into a large amount of a mixed solution of anhydrous ethanol and methanol, after a product was precipitated, a precipitate was filtered and a filter cake was collected, and the cleaned filter cake was dried at a constant temperature of 60°C for 12 h to obtain a solid product, i.e., the component Y.
In Example 1, the raw material Y2 includes an amine substance Y2-1 with a linear structure and an amine substance Y2-2 with a branched structure. The amine substance Y2-1 is the substance shown in Formula (5), the amine substance Y2-2 is the substance shown in Formula (7), and the amine substance Y2-1 and the amine substance Y2-2 are composed at a mass ratio of 1:1. A mass ratio of the raw material Y1 to the raw material Y2 is controlled to be 50:1.
Other preparation methods for the component Y may refer to Patent Application CN2023110335903.

(III) Preparation of a raw material X1

The raw material Y1 was prepared into a 0.1 mol/L aqueous solution, the aqueous solution was placed in a reaction vessel, a $NaBH_4$ aqueous solution equal to the aqueous solution of the raw material Y1 in volume was slowly added into the reaction vessel, a stirring speed was controlled at 300 rpm, a temperature of a reaction system was controlled at about 5°C, and a reaction was performed for 1 h. After the reaction was completed, a mixed liquid after the reaction was slowly poured into a large amount of frozen methanol for precipitation and separation, and after being filtered, the precipitate was dried at room temperature to obtain a solid product, i.e., the raw material X1.

(IV) Preparation of a raw material X2

The raw material Y1 was prepared into a 0.1 mol/L aqueous solution, the aqueous solution was placed in a reaction vessel, a $NaClO_2$ aqueous solution equal to the aqueous solution of the raw material Y1 in volume was slowly added into the reaction vessel, a stirring speed was controlled at 300 rpm, a temperature of a reaction system was controlled at about 5°C, and a reaction was performed for 1 h. After the reaction was completed, a mixed liquid after the reaction was dropwise added into a large amount of anhydrous ethanol, a precipitated flocculent product might be

observed, a precipitate was filtered and a filter cake was collected, the filter cake was alternately washed with deionized water and anhydrous ethanol, and the cleaned filter cake was dried at a constant temperature of 60°C for 12 h to obtain a solid product, i.e., the raw material X2.

(V) Preparation of a component X

The raw material X1 and the raw material X2 were mixed at a mass ratio of 1:1 to obtain a component X.

(V) Preparation of a binder for a secondary battery

The component X was dissolved in deionized water, and a preliminarily dissolved mixture was placed in a dispersion mixer to be stirred and dispersed at about 90°C for 6 h.

The component Y was dissolved in deionized water and mixed with the solution of the component X after being dispersed, and then the mixture was dispersed in the dispersion mixer to be stirred and dispersed at about 60°C for 2 h to obtain a gel-like liquid binder for a secondary battery. In Example 1, a mass ratio of the component X to the component Y is 1:1.

Example 2

The difference between Example 1 and this Example lies in that the mass ratio of the component X to the component Y is 1.5:1, and in the component X, the mass ratio of the raw material X1 and the raw material X2 is 1:2.

Example 3

The difference between Example 1 and this Example lies in that the mass ratio of the component X to the component Y is 1.5:1, and in the component X, the mass ratio of the raw material X1 and the raw material X2 is 2:1.

Example 4

The difference between Example 1 and this Example only lies in that the mass ratio of the component X to the component Y is 1.5:1.

Example 5

The difference between Example 1 and this Example only lies in that the mass ratio of the component X to the component Y is 1:2.

Example 6

The difference between Example 1 and this Example only lies in that in the component Y, the mass ratio of the raw material Y1 to the raw material Y2 is 25:1.

Example 7

The difference between Example 1 and this Example only lies in that the mass ratio of the component X to the component Y is 2:1.

Example 8

The difference between Example 1 and this Example only lies in that in the component Y, the mass ratio of the raw material Y1 to the raw material Y2 is 100:1.

Example 9

The difference between Example 1 and this Example only lies in that in the component Y, all the raw material Y1 is the amine substance Y2-1 with a linear chain structure.

Example 10

The difference between Example 1 and this Example only lies in that in the component Y, all the raw material Y1 is the amine substance Y2-2 with a branched structure.

Comparative Example 1

The binder in Example 1 is unmodified CMC, where the degree of substitution is 0.8-0.9 and the weight-average molecular weight is 180,000Da.

Comparative Example 2

The difference between Example 1 and this Comparative Example lies in that the binder for a secondary battery does not include the component Y.

Comparative Example 3

The difference between Example 1 and this Comparative Example lies in that the binder for a secondary battery does not include the component X.

Comparative Example 4

The difference between Example 1 and this Comparative Example lies in that the component X is only composed of the raw material X1 and does not include the raw material X2.

Comparative Example 5

The difference between Example 1 and this Comparative Example lies in that the component X is only composed of the raw material X2 and does not include the raw material X1.

Specific compositions of the binders for a secondary battery provided by the above Examples 1-10 and Comparative Examples 1-5 are shown in Table 1.

Table 1 Comparative table of relative proportions of the components in Examples 1-10 and Comparative Examples 1-5

| Group | Relative mass proportion of the components | | | |
|---|---|---|---|---|
| | Component X: Component Y | Raw material X1: Raw material X2 | Raw material Y1: Raw material Y2 | Amine substance Y2-1: Amine substance Y2-2 |
| Example 1 | 1:1 | 1:1 | 50:1 | 1:1 |
| Example 2 | 1.5:1 | 1:2 | 50:1 | 1:1 |
| Example 3 | 1.5:1 | 2:1 | 50:1 | 1:1 |
| Example 4 | 1.5:1 | 1:1 | 50:1 | 1:1 |
| Example 5 | 2:1 | 1:1 | 50:1 | 1:1 |
| Example 6 | 1:1 | 1:1 | 25:1 | 1:1 |
| Example 7 | 1:2 | 1:1 | 50:1 | 1:1 |
| Example 8 | 1:1 | 1:1 | 100:1 | 1:1 |
| Example 9 | 1:1 | 1:1 | 50:1 | Only Y2-1 is present, with no Y2-2 |
| Example 10 | 1:1 | 1:1 | 50:1 | Only Y2-2 is present, with no Y2-1 |
| Comparative Example 1 | / | / | / | / |

(continued)

| Group | Relative mass proportion of the components | | | |
|---|---|---|---|---|
| | Component X: Component Y | Raw material X1: Raw material X2 | Raw material Y1: Raw material Y2 | Amine substance Y2-1: Amine substance Y2-2 |
| Comparative Example 2 | Only X is present, with no Y | 1:1 | / | / |
| Comparative Example 3 | Only Y is present, with no X | / | 50:1 | 1:1 |
| Comparative Example 4 | 1:1 | Only X1 is present, with no X2 | 50:1 | 1:1 |
| Comparative Example 5 | 1:1 | Only X2 is present, with no X1 | 50:1 | 1:1 |

<Test for tensile elongation at break>

Preparation of a binder film: the binders for a secondary battery in Examples 1-10 and Comparative Examples 1-5 were taken and prepared into an adhesive liquid with 1% of solid content, the adhesive liquid was filled into a Teflon mold, followed by evaporation of water, and then the adhesive liquid was dried in vacuum at 60°C for 12 h to thoroughly remove residual water, so as to prepare the binder film.

Test for tensile elongation at break: the film prepared by the binders for a secondary battery in Examples 1-10 and Comparative Examples 1-5 was cut into dumbbell-shaped specimens of the same size according to the Guobiao (GB, Chinese National Standard) GB 13022-1991 to be tested by a tensile testing machine. In this case, the deformation speed was 50±5 mm/min. Three measurements were taken for each group, and the average value was calculated. Test results are shown in Table 2.

<Test for performance of an electrode plate>

Preparation of a negative electrode slurry: a negative electrode slurry was prepared from an active substance, a conductive agent, styrene-butadiene rubber (SBR), and a binder, where the active substance was artificial graphite, the conductive agent was conductive carbon black, and the binder is selected from the binders for a secondary battery provided in Examples 1-10 and Comparative Examples 1-5. The mass percentage of the graphite, the conductive carbon black, the SBR, and the binder is 96%:1%:1.5%:1.5%.

(I) Evaluation of warpage of electrode plate

The above groups of slurry were coated on a negative electrode current collector, the areal densities of the dried groups of electrode plates were controlled at 15 mg/cm$^2$, 20mm×20mm square areas at the centralmost positions of the groups of electrode plates were cut and placed in an oven and baked at 80°C for 6 h, after being cooled, the electrode plates were then transferred to a constant-temperature heating stage, where the temperature of the constant-temperature heating stage was 140°C, and after the warpage height was stable, height differences between four corners of the square electrode plates and a heating stage surface were measured, and an average value was taken. Three measurements were taken for each group, and the average value was calculated. Test results are shown in Table 2.

(II) Evaluation of warpage of the electrode plate

The above groups of slurry were coated on a negative electrode current collector, the areal densities of the dried groups of electrode plates were controlled at 15 mg/cm$^2$. The above groups of negative electrode plates were taken to measure the power shedding rates, the electrode plates were cut into 15 mm×60 mm specimens, the masses of the specimens were weighed, the specimens were tested using a linear friction tester, and the number of friction cycles was set to 30; after friction, the masses of the electrode plates were weighed again after powder on the surfaces was brushed off, the coating powder shedding rate=(mass of the electrode plate before friction-mass of the electrode plate after friction)/the mass of the electrode plate before friction* 100%. Three measurements were taken for each group, and the average value was calculated. Test results are shown in Table 2.

(III) Evaluation of the areal density of the electrode plate

The flexibility of the binder material will affect the compacted density of the electrode plate. Improvement of the flexibility and bonding force of the material can improve the areal density of the electrode plate to a certain extent, thereby further improving the energy density of the battery.

The above groups of slurry were coated on a negative electrode current collector, the heights of the rolled electrode plates were controlled at 160 μm, 20mm×20mm square areas at the centers of the electrode plates were cut, the masses of the electrode plates were weighed, 20mm×20mm square areas at the centers of copper foils without the slurry were cut, and the masses of the current collectors were weighed. The areal density of the electrode plate=(the mass of the electrode plate-the mass of the current collector)/(2×2). Three measurements were taken for each group, and the average value was calculated. Test results are shown in Table 2.

(IV) Evaluation of the energy density of the battery

Preparation of a battery: the negative electrode plate used for preparing the battery is the same as the electrode plate used for evaluating the areal density. A positive electrode plate was prepared according to a conventional process: a positive electrode slurry was prepared from a positive electrode active substance, a conductive agent, and a binder at a mass percentage of 97%:2%:1%, where the positive electrode active substance was a nickel-cobalt-manganese ternary material (523 composition: 50% nickel, 20% cobalt, 30% manganese), the conductive agent was conductive carbon super-p, and the binder was PVDF (Suwei 5130). A separator was coated with 7 um base film+single-sided 3um ceramic+double sides (1 um for each). An electrolyte was prepared by a conventional formula: a 1 mol/L lithium hexafluorophosphate ($LiPF_6$) solution, a solvent (the mass ratio of ethylene carbonate (EC), propylene carbonate (PC), and diethyl carbonate (DEC) is 3:1:3), an additive vinylene carbonate (VC) accounting for 0.3% of the mass of the electrolyte, and 1,3-propane sultone (PS) accounting for 0.1% of the mass of the electrolyte. The positive electrode plate, the negative electrode plate, and the separator were wound into a cell, the cell was encapsulated with an aluminum-plastic film, and a lithium-ion battery was prepared according to a conventional pouch battery manufacturing process.

Energy density test: the above groups of lithium-ion pouch batteries were charged at a constant current of 0.5C rate until the voltage reached 4.35V and then charged at a constant voltage of 4.35V until the current reached 0.05C. In this case, the lithium-ion batteries reached a fully charged state, were then left stand for 5min, and discharged at a constant current of 0.5C until the voltage reached 2.8V, then the lithium-ion batteries were left stand for 5min, capacity and voltage plateaus of the lithium-ion batteries discharged at the constant current of 0.5C were recorded, and finally, lengths, widths, and thicknesses of the lithium-ion batteries were measured. The energy density (Wh/L) of the lithium-ion battery=(the capacity of the lithium-ion battery discharged at a constant current of 0.5C×the voltage plateau of the lithium-ion battery discharged at a constant current of 0.5C)/(the length of the lithium-ion battery×the width of the lithium-ion battery×the thickness of the lithium-ion battery)*100%. Three measurements were taken for each group, and the average value was calculated. Test results are shown in Table 2.

Table 2 Table of application performance test results of the binders provided by Examples 1-10 and Comparative Examples 1-5

| Group | Tensile elongation at break (%) | Warpage height of electrode plate (cm) | Coating powder shedding rate of electrode plate (%) | Areal density of electrode plate ($mg/cm^2$) | Energy density of battery (Wh/L) |
|---|---|---|---|---|---|
| Example 1 | 32.1 | 4.9 | 0.19 | 15.8 | 511.6 |
| Example 2 | 26.5 | 4.6 | 0.23 | 15.3 | 494.3 |
| Example 3 | 26.8 | 4.6 | 0.23 | 15.2 | 493.5 |
| Example 4 | 26.6 | 4.2 | 0.22 | 15.5 | 499.1 |
| Example 5 | 24.3 | 5.1 | 0.26 | 14.9 | 491 |
| Example 6 | 19.3 | 4.2 | 0.56 | 13.7 | 482.7 |
| Example 7 | 32.9 | 6.1 | 0.25 | 15.6 | 502.1 |
| Example 8 | 16.1 | 4.4 | 0.32 | 14.8 | 488 |
| Example 9 | 18.1 | 4.2 | 0.34 | 15.2 | 492.1 |
| Example 10 | 18.2 | 4.3 | 0.34 | 15.1 | 491.9 |

(continued)

| Group | Tensile elongation at break (%) | Warpage height of electrode plate (cm) | Coating powder shedding rate of electrode plate (%) | Areal density of electrode plate ($mg/cm^2$) | Energy density of battery (Wh/L) |
|---|---|---|---|---|---|
| Comparative Example 1 | 8.1 | 11.6 | 0.57 | 13.1 | 479.3 |
| Comparative Example 2 | 11.7 | 6.4 | 0.36 | 13.7 | 481.9 |
| Comparative Example 3 | 34.1 | 10.9 | 0.33 | 13.9 | 485 |
| Comparative Example 4 | 18.9 | 9.2 | 0.33 | 14.7 | 491 |
| Comparative Example 5 | 19.1 | 8.9 | 0.35 | 14.8 | 492.1 |

It can be seen from Table 2 that performance of Examples 1-10 and Comparative Examples 2-4 in various application tests is better than that of Comparative Example 1 (common CMC group).

It can be seen from data in Comparative Example 2 that in a case where only the component X is present, without no component Y, the elongation at break of the binder film of the binder is lower than that of other groups (except for Comparative Example 1), indicating that the component Y has the effects of increasing the elongation at break of the binder material.

It can be seen from data in Comparative Example 3 that in a case where only the component Y is present, with no component X, the warpage height of the electrode plate is the highest except for that in Comparative Example 1, indicating that the addition of the component X is beneficial to reducing the warpage height of the electrode plate during high-temperature baking. Further, it can be seen from data in Comparative Example 4 and Comparative Example 5 that presence of the raw material X1 and the raw material X2 at the same time in the component X can obviously reduce the warpage height of the electrode plate during high-temperature baking. It is hypothesized that the hydroxyl groups of the raw material X1 and the carboxyl groups of the raw material X2 can form a part of ester groups during stirring, such that the number of intramolecular and intermolecular hydrogen bonds is decreased, and that the ester groups are relatively flexible, such that the flexibility of the material is further improved, the stress of the material is reduced, and the warpage height of the electrode plate is reduced.

By comparing data in Examples 1, 6, and 8, it can be seen that the optimal mass ratio of the raw material Y1 to the raw material Y2 is 50:1, and at this ratio, the elongation at break of the binder film of the binder is the highest, with minimum power shedding, such that the greater the areal density of the electrode is, the greater the energy density of the battery is. It is hypothesized that when the amount of the raw material Y2 is excessive, excessive crosslinking of the component Y is easily caused, such that the toughness of the material is reduced; and when the amount of the raw material Y2 is insufficient, it tends to result in insufficient crosslinking component of the component Y, and the toughness of the material is insufficiently improved.

By comparing data in Examples 1, 9, and 10, it can be seen that the presence of the raw material Y2-1 and the raw material Y2-2 at the same time can significantly improve the elongation at break of the binder film of the binder. It is hypothesized that the presence of the amine substances with the linear structure and the branched structure at the same time can enable more complex and diverse crosslinking structures to be formed between molecules of the raw material Y1, which increases the intermolecular entanglement points, thereby improving the elongation at break of the material.

After comprehensive comparison, the application test performance of Example 1 is better among the above Examples and Comparative Examples.

What is disclosed above is merely one or more preferred examples of the present application, and these cannot be used to limit the scope of rights of the present application. Those of ordinary skill in the art can understand all or part of the processes for implementing the above examples, and equivalent changes made in accordance with the claims of the present application shall still fall within the scope covered by the present application.

## Claims

1. A binder for a secondary battery, **characterized in that** the binder for a secondary battery comprises a component X and a component Y; the component X is formed by mixing a raw material X1 and a raw material X2; the component Y is prepared from a raw material Y1 and a raw material Y2 via a Schiff base reaction; the raw material X1, the raw material X2, and the raw material Y1 are all cellulose derivatives containing a repeating unit A and a repeating unit B, wherein

    the repeating unit A is as follows:

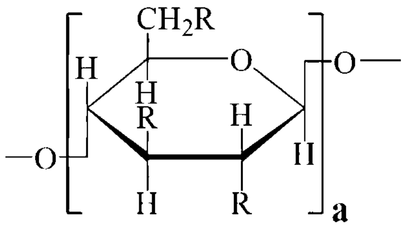

;

the repeating unit B is as follows:

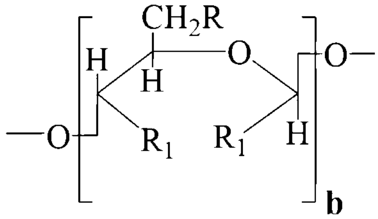

;

in the raw material X1, the raw material X2, and the raw material Y1, when a represents a molar weight of the repeating unit A and b represents a molar weight of the repeating unit B, the following relationship is satisfied: $0 < \frac{b}{a+b} < 1$; R in the repeating unit A and the repeating unit B is independently selected from -OH or one or more of derived groups thereof;
in the raw material X1, $R_1$ in the repeating unit B represents $-CH_2OH$;
in the raw material X2, $R_1$ in the repeating unit B represents -COOH;
in the raw material Y1, $R_1$ in the repeating unit B represents -CHO; and
the raw material Y2 is an amine substance containing at least two terminal amino groups.

2. The binder for a secondary battery according to claim 1, **characterized in that** a mass ratio of the component X to the component Y is (1-2):(1-2).

3. The binder for a secondary battery according to claim 2, **characterized in that** in the component X, a mass ratio of the raw material X1 to the raw material X2 is (1-2):(1-2).

4. The binder for a secondary battery according to claim 2, **characterized in that** in the component Y, a mass ratio of the raw material Y1 to the raw material Y2 is (25-100):1.

5. The binder for a secondary battery according to claim 1, **characterized in that** the raw material Y2 is selected from at least one of the following substances:

   polyalkenes containing at least two terminal amino groups and derivatives thereof;
   polyacrylamide containing at least two terminal amino groups and derivatives thereof;
   polysilane ether containing at least two terminal amino groups and derivatives thereof; and
   polyols containing at least two terminal amino groups and derivatives thereof.

6. The binder for a secondary battery according to claim 5, **characterized in that** the raw material Y2 further comprises an amine substance Y2-1 with a linear structure and an amine substance Y2-2 with a branched structure.

7. The binder for a secondary battery according to claim 6, **characterized in that** the amine substance Y2-1 is polyethylene glycol diamine, and the amine substance Y2-2 is trimethylolpropane tris[poly(propylene glycol), amine terminated] ether.

8. A negative electrode slurry composition for a secondary battery, **characterized by** comprising the binder for a secondary battery according to any one of claims 1-7.

9. A negative electrode for a secondary battery, **characterized by** having an electrode composite material layer

prepared from the negative electrode slurry composition for a secondary battery according to claim 8.

10. A secondary battery, **characterized by** having the negative electrode for a secondary battery according to claim 9.

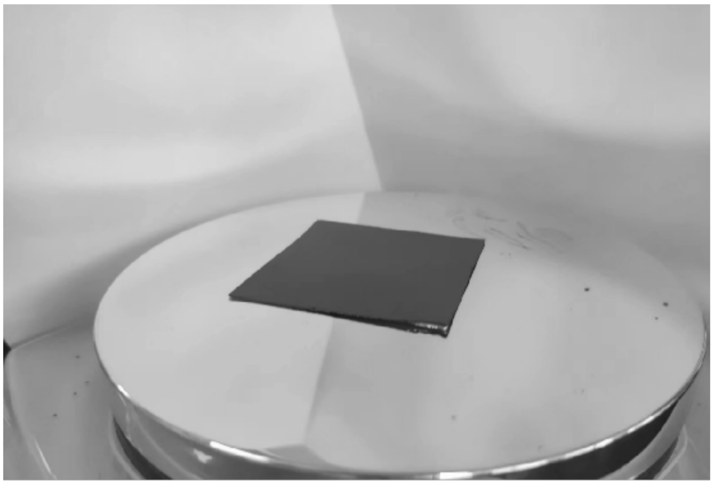

FIG. 1

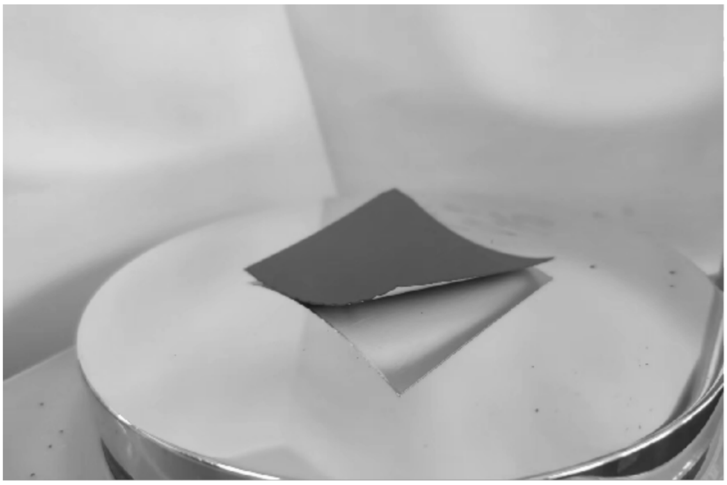

FIG. 2

## INTERNATIONAL SEARCH REPORT

International application No.
**PCT/CN2024/108365**

**A. CLASSIFICATION OF SUBJECT MATTER**

C09J101/28(2006.01)i; H01M4/62(2006.01)i; H01M 10/0525(2010.01)i

According to International Patent Classification (IPC) or to both national classification and IPC

**B. FIELDS SEARCHED**

Minimum documentation searched (classification system followed by classification symbols)

IPC/CPC: C09J101/-; H01M4/-; H01M 10/-

Documentation searched other than minimum documentation to the extent that such documents are included in the fields searched

Electronic data base consulted during the international search (name of data base and, where practicable, search terms used)

CJFD, CNTXT, ENTXTC, WPABS, STN: 粘结剂, 粘合剂, 电池, 纤维素, 多糖, binder, adhesive, battery, cellulose, polysaccharide

**C. DOCUMENTS CONSIDERED TO BE RELEVANT**

| Category* | Citation of document, with indication, where appropriate, of the relevant passages | Relevant to claim No. |
|---|---|---|
| PX | CN 118389090 A (CHONGQING SHUOYINGFENG NEW ENERGY TECHNOLOGY CO., LTD.) 26 July 2024 (2024-07-26)<br>claims 1-10 | 1-10 |
| A | US 2016204439 A1 (ZEON CORP.) 14 July 2016 (2016-07-14)<br>description, paragraphs [0018]-[0020] | 1-10 |
| A | CN 101747571 A (BEIJING GENERAL RESEARCH INSTITUTE FOR NONFERROUS METALS) 23 June 2010 (2010-06-23)<br>entire document | 1-10 |
| A | CN 106573991 A (DAI ICHI KOGYO SEIYAKU CO., LTD.) 19 April 2017 (2017-04-19)<br>entire document | 1-10 |
| A | CN 116023881 A (RUIPU LANJUN ENERGY CO., LTD. et al.) 28 April 2023 (2023-04-28)<br>entire document | 1-10 |
| A | JP 2015053152 A (HITACHI MAXELL LTD.) 19 March 2015 (2015-03-19)<br>entire document | 1-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 October 2024** | **22 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2024/108365

C. DOCUMENTS CONSIDERED TO BE RELEVANT

| Category* | Citation of document, with indication, where appropriate, of the relevant passages | Relevant to claim No. |
|---|---|---|
| A | JP H1167213 A (JSR CORP.) 09 March 1999 (1999-03-09)<br>entire document | 1-10 |
| A | KR 102401576 B1 (NOROO PAINT & COATINGS CO., LTD.) 25 May 2022 (2022-05-25)<br>entire document | 1-10 |

Form PCT/ISA/210 (second sheet) (July 2022)

**INTERNATIONAL SEARCH REPORT**
**Information on patent family members**

International application No.
**PCT/CN2024/108365**

| Patent document cited in search report | Publication date (day/month/year) | Patent family member(s) | Publication date (day/month/year) |
|---|---|---|---|
| CN 118389090 A | 26 July 2024 | None | |
| US 2016204439 A1 | 14 July 2016 | WO 2014188724 A1 | 27 November 2014 |
| | | JPWO 2014188724 A1 | 23 February 2017 |
| | | JP 6481609 B2 | 13 March 2019 |
| | | KR 20210100219 A | 13 August 2021 |
| | | KR 102369488 B1 | 02 March 2022 |
| | | KR 20160012141 A | 02 February 2016 |
| CN 101747571 A | 23 June 2010 | None | |
| CN 106573991 A | 19 April 2017 | KR 20170046155 A | 28 April 2017 |
| | | KR 102368398 B1 | 25 February 2022 |
| | | TW 201620941 A | 16 June 2016 |
| | | TWI 659970 B | 21 May 2019 |
| | | EP 3187509 A1 | 05 July 2017 |
| | | EP 3187509 A4 | 07 March 2018 |
| | | EP 3187509 B1 | 16 June 2021 |
| | | US 2017256799 A1 | 07 September 2017 |
| | | US 10355280 B2 | 16 July 2019 |
| | | JPWO 2016031449 A1 | 22 June 2017 |
| | | WO 2016031449 A1 | 03 March 2016 |
| CN 116023881 A | 28 April 2023 | None | |
| JP 2015053152 A | 19 March 2015 | JP 6258641 B2 | 10 January 2018 |
| JP H1167213 A | 09 March 1999 | None | |
| KR 102401576 B1 | 25 May 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 115394945 A
- CN 113991063 A
- CN 2023107423260
- CN 2023110336003
- CN 2023110335903
- GB 130221991 A

### Non-patent literature cited in the description

- **WANG QINMEI** ; **LIAO YANHONG** ; **TENG WEI et al.** Determination of Concentration of Aldehyde Groups on Oxidized Sodium Alginate by Hydroxylamine Hydrochloride-Potentiometric Titration Method. Analytical Laboratory, 2008, vol. 27, 83-86